Europäisches Patentamt

European Patent Office

Office européen des brevets

(11) Publication number: **0 233 161**
A1

# EUROPEAN PATENT APPLICATION

(21) Application number: 87830055.7

(22) Date of filing: 13.02.87

(51) Int. Cl.⁴: **B 01 D 35/14,** H 01 H 36/00

(30) Priority: 14.02.86 IT 5298686 U

(43) Date of publication of application: 19.08.87
Bulletin 87/34

(84) Designated Contracting States: AT BE CH DE ES FR GB
GR IT LI LU NL SE

(71) Applicant: G.N.G. di GISONNO N. & GRAZIANO A. S.n.c.,
Via G. D'Annunzio 2, I-10092 Beinasco (Torino) (IT)
Applicant: M.P. FILTRI S.r.l., Via Matteotti 2,
I-20060 Pessano con Bornago (Milano) (IT)

(72) Inventor: Graziano, Arturo, Via Castagnole 15,
I-10040 Volvera (Torino) (IT)

(74) Representative: Quinterno, Giuseppe et al, c/o
Jacobacci-Casetta & Perani S.p.A. Via Alfieri, 17,
I-10121 Torino (IT)

(54) Differential clogging director for a filter for hydraulic fluids.

(57) The device comprises:
a hollow body (6, 7) with first and second apertures (14, 8) for connection to respective regions upstream and downstream of a filter (4),
a piston (9) in the body (6, 7) subject to the action of the pressure difference between the regions (14, 8) upstream and downstream of the filter (4), and a magnet (13) fixed to the piston (9) and able to operate an indicator device (20, 21) magnetically when the piston (9) takes up a position in the body (6, 7) corresponding to a predetermined degree of clogging of the filter (4).

The device comprises a plurality of magnetically-operated electrical switches (20) located in the body (6, 7) in successive positions along the path of the magnet (13), whereby the number of switches (20) which are open or closed depends on the position of the magnet (13) relative to the body (6, 7) and is thus indicative of the degree of clogging of the filter (4).

0233161

- 1 -

<u>Device for the differential monitoring of the clogging of a filter for hydraulic fluid.</u>

The present invention relates to a device for differential monitoring of the clogging of a filter for hydraulic fluid.

More particularly, the invention concerns a device for monitoring clogging, of the type comprising:

a hollow body with first and second apertures for connection to respective regions upstream and downstream of a filter,

a piston movable in the body under the action of the pressure difference between the regions upstream and downstream of the filter, and

a magnet fixed to the piston and able to operate indicator means magnetically when the piston takes up a position in the body corresponding to a predetermined degree of clogging of the filter.

Devices for monitoring clogging, of the type specified above, made until now are of the threshold type, that is to say, they provide an indication or a signal only when the clogging of the filter being monitored exceeds a predetermined threshold level.

The object of the present invention is to provide a device for differential monitoring of clogging, which is of the type specified but is able to detect and signal the progressive clogging of the filter in a dynamic manner.

This object is achieved according to the invention by means of a device of the type specified above, the main characteristic of which lies in the fact that the indicator means comprise a plurality of magnetically -operated electrical switches located in the body in successive positions along the path of the magnet, whereby the number of switches which open or closed depends on the position of the magnet relative to the body and is thus indicative of the degree of clogging of the filter.

According to a further characteristic, the magnetically-operated electrical switches are preferably constituted by reed relays.

Conveniently, according to a further characteristic of the device of the invention, each of the switches is connected to an indicator light.

In order to monitor the degree of clogging of a hydraulic fluid filter of a machine having a programmable control (PLC), the switches are conveniently connected in order to the inputs of a coding circuit whose output may be connected to the programmable control of the machine.

Further characteristics and advantages of the device according to the invention will become apparent from the detailed description which follows with reference to the appended drawings, provided purely by way of non-limiting example, in which:

Figure 1 is a perspective view of a hydraulic filter provided with a device for monitoring clogging according to the invention,

Figure 2 is a perspective view of a device for monitoring clogging, according to the invention,

Figure 3 is a partially sectioned view taken on the line III-III of Figure 2, and

Figure 4 is an electrical diagram of the monitoring device of the invention.

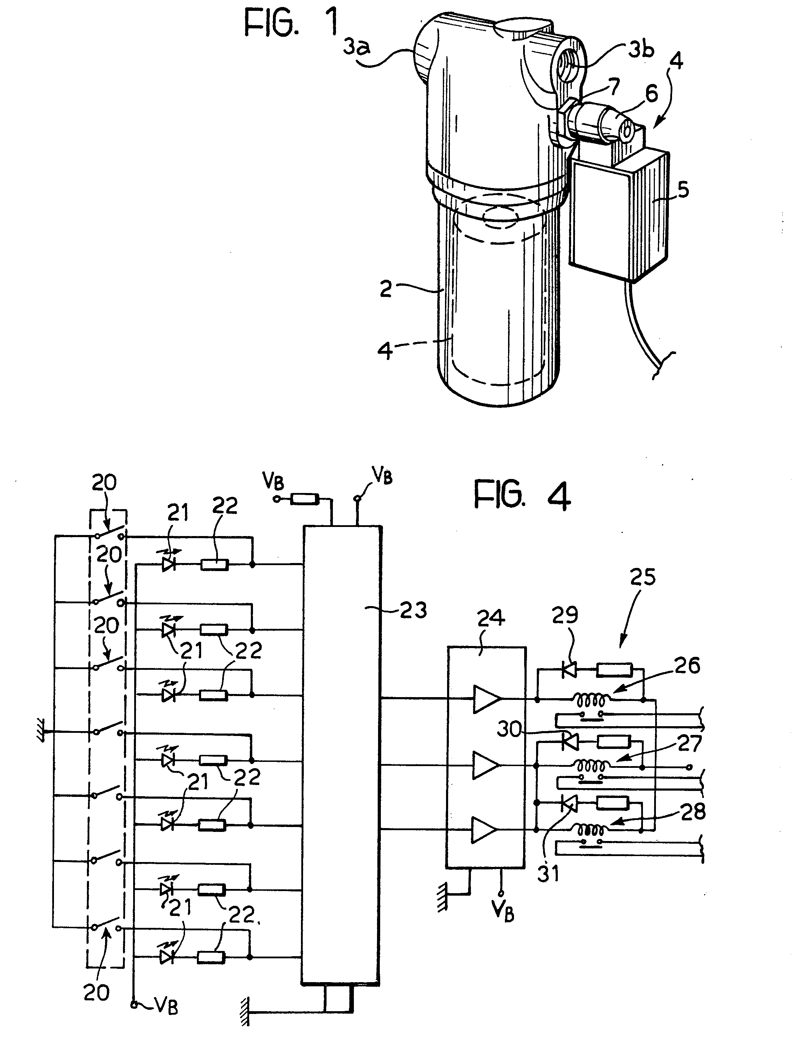

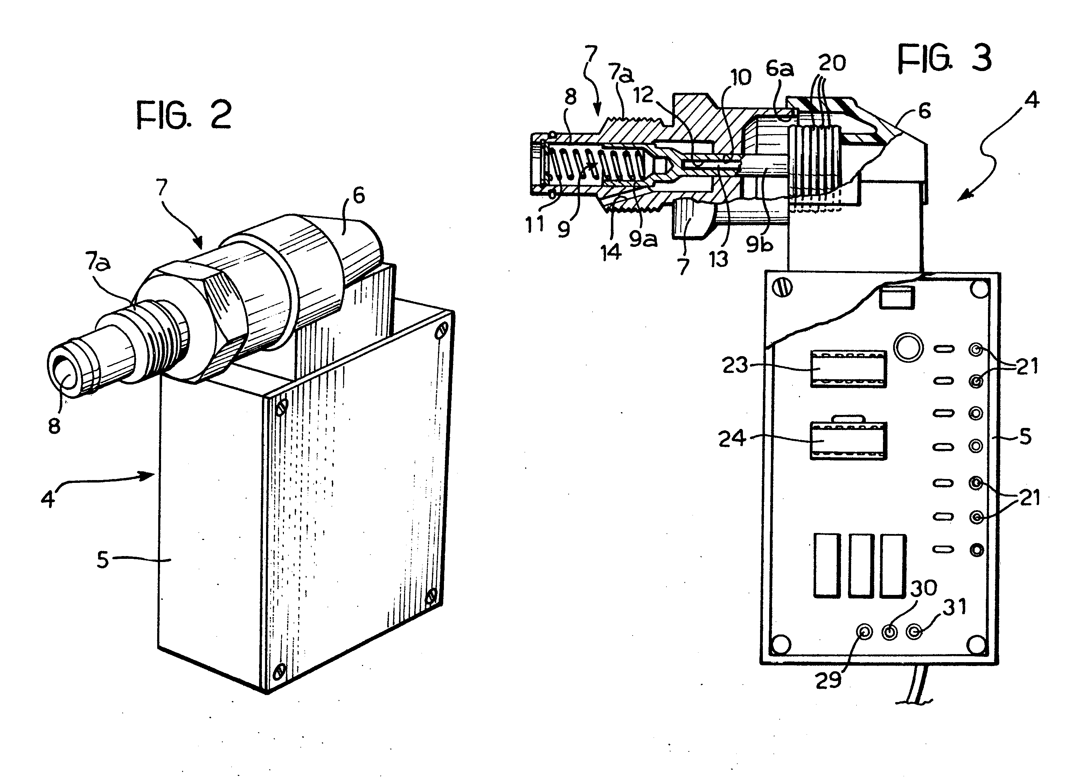

In Figure 1 an oleodynamic fluid filter is generally indicated 1. In known manner, this filter includes a body 2 surmounted by a head 3. A filter element 4 is housed in the body 2 and fluid to be filtered is led to it through an inlet connector 3a in the head. The filtered oil leaves the filter 1 through an aperture 3b formed in the head 3.

A device for differential monitoring of clogging, according to the invention, is generally indicated 4. It comprises essentially a container 5 which, in the embodiment illustrated, is parallelepipedal in shape, and its upper wall is connected to a shaped hollow body 6 having an aperture 6a (Figure 3). In this aperture is fixed a first end of a body 7 whose other end is formed as a connector and has external threading 7a. An axial hole 8 is formed in this end of the body 7 and a piston 9 is movable therein. The piston comprises a tubular part 9a sealingly slidable in the hole 8 in the body 7 and an extension 9b movable a piston 9. This piston comprises a tubular part 9a sealingly slidable in the hole 8 in the body 7 and an extension 9b movable through a guide hole 10 in the body 7 and able to extend into the body 6. The portion 9b of the piston 9 has an axial hole 12 in which a permanent magnet 13 is

- 4 -

located. A helical spring 11 is disposed in the hole 8 in the body 7 and urges the piston 9 towards the body 6.

A passage, indicated 14, is formed in the wall of the body 7 and opens into the hole 8 beyond the tubular portion 9a of the piston 9. The body 7 is intended for connection to the head 3 of the filter 1 by means of the screwing of the threading 7a into a corresponding threaded aperture in the head 3 adjacent the aperture 3b. As a result of the connection of the body 7 to the head 3, the hole 8 is put into communication with a region downstream of the filter element 4, in known manner, while the passage 14 is put into communication with an upstream region. Hence, in use, the piston 9 is subject to the pressure difference existing between the upstream and downstream sides of the filter element 4 and its axial position clearly depends on the degree of clogging of the filter element.

As shown particularly in Figure 3, a row of reed relays 20 is located in the body 6 adjacent the path of the end 9b of the piston 9. As shown in Figure 4, these reed relays have respective terminals connected to earth and their other terminals connected to a d.c. voltage supply $V_B$ through respective light-emitting diodes 21 and resistors 22. In the manner illustrated in Figure 4, the reed relays 20 are also connected in order to the inputs of a coding circuit 23, for example, an integrated circuit 9318 made by Fairchild. This coding circuit is connected to a buffer-driver circuit 24, for example, a Fairchild 7407 device.

When the filter element 4 is cleaned, the portion 9b of the piston 9 extends fully into the body 6 and the reed relays 20 are all closed and the light-emitting diodes 21 all lit.

With the progressive clogging of the filter element 4, the piston 9 gradually leaves the body 6 and the permanent magnet 13 enables a progressively increasing number of reed relays 20 to open. The light-emitting diodes 21 associated with the open reed relays are switched off and the coding circuit 23 outputs coding signals, for example in BCD code, which may be supplied to the programmable logic controller of the machine in which the filter 1 is installed, in order to supply the programmable logic controller with a dynamic indication of the progressive clogging of the filter element 4.

Particularly when the device for monitoring clogging is intended for connection to the programmable logic controller of a machine, the buffer-driver circuit 24 may be connected to a relay-output device 25, as shown in Figure 4, including three relays 26, 27 and 28 of which the relay 26 is associated with the less significant bit of the output of the coder 23. Light-emitting diodes 29 to 31 are conveniently connected in parallel with the coils of the relays 26 to 28.

Naturally, the invention extends to all embodiments which achieve equal utility by using the same innovative concept.

It is clear that, among other things, the number of reed relays is not intended necessarily to be limited to the number illustrated in the drawings.

CLAIMS

1.    Device for differential monitoring of the clogging of a filter (1) for hydraulic fluid, comprising:

a hollow body (6,7) with first and second apertures (14,8) for connection to respective regions upstream and downstream of a filter (4),

a piston (9) movable in the body (6,7) under the action of the pressure difference between the regions (14,8) upstream and downstream of the filter (4), and

a magnet (13) fixed to the piston (9) and able to operate indicator means (20,21) magnetically when the piston (9) takes up a position in the body (6,7) corresponding to a predetermined degree of clogging of the filter (4),

characterised in that the indicator means comprise a plurality of magnetically-operated electrical switches (20) located in the body (6,7) in successive positions along the path of the magnet (13), whereby the number of switches (20) which are open or closed depends on the position of the magnet (13) relative to the body (6,7) and is thus indicative of the degree of clogging of the filter (4).

2.    Device according to Claim 1, characterised in that the switches are reed relays (20).

3.    Device according to Claim 1 or Claim 2, characterised in that each of the switches is associated with a respective indicator light (21).

4.    Device for differential monitoring of clogging according to any one of the preceding claims, particularly for a machine provided with a programmable logic controller (PLC), characterised in that the switches (20) are connected in order to the inputs of a coding circuit (23) whose output is connected to the programmable logic controller of the machine.

5. Device according to Claim 4, characterised in that the output of the coding device (23) is connected to a buffer-driver circuit (24) and to a relay circuit (25) including a plurality of relays (26 to 28) each associated with a corresponding output of the coding device (23).

**FIG. 1**

**FIG. 4**

FIG. 3

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-1 177 932 (WADE PNEUMATIC LTD)<br>* Page 2, lines 90-130; page 3, lines 1-22 * | 1-3 | B 01 D 35/14<br>H 01 H 36/00 |
| Y | US-A-3 896 280 (D.O. BLAKE)<br>* Column 1, lines 30-58 * | 1-3 | |
| A | DE-A-2 335 276 (PARKER-HANNIFIN)<br>----- | | |

| | TECHNICAL FIELDS SEARCHED (Int. Cl.4) |
|---|---|
| | B 01 D<br>G 01 L<br>H 01 H |

The present search report has been drawn up for all claims

| Place of search | Date of completion of the search | Examiner |
|---|---|---|
| THE HAGUE | 22-05-1987 | DE PAEPE P.F.J. |